# EUROPEAN PATENT SPECIFICATION

(11) **EP 4 190 168 B1**
(45) Date of publication and mention of the grant of the patent: **11.11.2026**
(21) Application number: 22191635.6
(22) Date of filing: 23.08.2022
(51) Int. Cl.: A23P 30/20, A23J 1/00, A23J 1/12, A23J 3/14, A23J 3/26, A23K 10/30, A23K 10/38, A23K 40/25, A23L 33/185, A23L 33/22, A23J 3/22, A23L 7/20, A23L 13/40

(54) **HIGH MOISTURE TEXTURISED PLANT PROTEIN FROM BREWER'S SPENT GRAIN**
HOCHFEUCHTES TEXTURIERTES PFLANZENPROTEIN AUS BIERTREBER
PROTÉINE VÉGÉTALE TEXTURÉE À FORTE TENEUR EN EAU À BASE DE DRÊCHE DE BRASSERIE

(30) Priority: 03.12.2021 EP 21212258
(43) Date of publication of application: 07.06.2023
(73) Proprietor: Circular Food Solutions AG, 8404 Winterthur (CH)
(72) Inventor: Witschi, Friedrich, 8260 Stein am Rhein (CH); Petry, Carsten, 8400 Winterthur (CH)
(74) Representative: Schmitz, Joseph

(56) References cited:
- WO-A1-2018/050863
- WO-A1-2021/195175
- WO-A1-2021/224188
- AU-B2- 773 170
- US-A1- 2004 185 148
- US-A1- 2006 105 098
- US-A1- 2018 220 694
- US-A1- 2021 100 263
- NASCIMENTO TALITA A ET AL: "Effect of Brewer's spent grain and temperature on physical properties of expanded extrudates from rice", LWT- FOOD SCIENCE AND TECHNOLOGY, ACADEMIC PRESS, UNITED KINGDOM, vol. 79, 13 January 2017 (2017-01-13), pages 145 - 151, XP029925055, ISSN: 0023-6438, DOI: 10.1016/J.LWT.2017.01.035
- STOJCESKA V ET AL: "The recycling of brewer's processing by-product into ready-to-eat snacks using extrusion technology", JOURNAL OF CEREAL SCIENCE, ACADEMIC PRESS LTD, GB, vol. 47, no. 3, 1 May 2008 (2008-05-01), pages 469 - 479, XP022609826, ISSN: 0733-5210, [retrieved on 20080414], DOI: 10.1016/J.JCS.2007.05.016
- GRASSO SIMONA ED - ANESE MONICA ET AL: "Extruded snacks from industrial by-products: A review", TRENDS IN FOOD SCIENCE AND TECHNOLOGY, ELSEVIER SCIENCE PUBLISHERS, GB, vol. 99, 13 March 2020 (2020-03-13), pages 284 - 294, XP086133921, ISSN: 0924-2244, [retrieved on 20200313], DOI: 10.1016/J.TIFS.2020.03.012

## Description

The present disclosure relates to a method for producing a high moisture texturised plant protein and a corresponding system. The disclosure also encompasses a vegetarian food product produced with said method or said system. More particularly, the present invention relates to a multipurpose ready-to-use high protein texturate obtained from brewer's spent grain and other vegetable protein powders and a process for preparing the same.

The demand for high protein foods in which several protein sources are used of which major contribution arises from plant sources has risen in recent years. The technological advances concerning the creation of a new texture particularly using vegetable protein have led to the development of texturised vegetable protein (TVP) or texturised plant protein (TPP) or meat analogue.

The use of an extruder under appropriate pressure-shear-temperatures combination yields a product that is fibrous in nature, filamentary in structure, with toughness and chewy texture of meat. This whole process is called thermoplastic extrusion. The advantages of this technology lie in low product cost e.g. because the raw material to be processed is low in cost.

The thermoplastic extrusion process involves the preparation of brewer's spent grain mixture along with other ingredients followed by feeding the mixture into a cooking extruder wherein it is subjected to heat, shear and pressure. When this cooked viscoelastic mass comes out of a restriction, conventionally known as die, the fibrous expanded structure is formed which solidifies to hard texture on cooling or drying. On rehydration and cooking, the fibrous TVP can provide a texture/bite and a mouthfeel comparable to cooked meat.

EP 3 512 352 A1 discloses food compositions, particularly pet food compositions, having a high content of plant protein. The plant protein is prepared by processing Brewer's Spent Grain (BSG), having a moisture content of about 15 % to about 35% by weight, so as to reduce the particle size of the BSG and separating the processed BSG so as to provide a low particle size, high protein fraction.

XP022609826 discloses a methof to produce a ready-to-eat snack from wheat flour, corn starch, yogurt powder and Brewer's Spent Grain (BSG) having a moisture content of 75%, which was sourced from an external brewery, was refrigerated and then dried at 150°C to a moisture cotent of 5 - 7%, milled to 1, 0.5 and 0.25 mesh screens, packed and sealed and kept until is was introduced in an extruded with the remaining ingredients as a dry mixture in combination with water.

However, BSG is widely viewed as food waste or side stream of the brewing and brewer as well as spirits beverage industry and not commonly used in human food products. This is due to the fact that the processing of high amounts of BSG is technically challenging.

The present invention has been made in view of the above problems. An object of the present invention is to develop a brewer's spent grain multipurpose food ingredient having high protein content. Another object of the present invention is to provide a brewer's spent grain multipurpose food ingredient in ready-to-use form for convenience to consumers. Still another object of the present invention is to develop a brewer's spent grain multipurpose food ingredient having high protein content in ready-to-use form using texturised vegetable protein (TVP) as the starting material. A further object of the present invention is to provide a process for preparing a brewer's spent grain multipurpose food ingredient having high protein content in ready-to-use form texturised vegetable protein (TVP).

The invention is defined in the independent claims. Dependent claims described preferred embodiments.

The present disclosure relates to a method for producing a high moisture texturised plant protein having a water content of 40% to 70% by weight. The method comprises the steps of
a) grinding of hot brewer's spent grain, BSG, wherein the BSG is directly obtained from a brewing process, wherein the hot BSG has a temperature of 60°C to 70°,
b) providing ingredients for obtaining a mixture, the ingredients comprising 15% to 60% by weight of the undried ground BSG and at least a plant protein, based on the entire weight of the mixture, and wherein the undried BSG has a dry weight of 10 to 24 %,
c) processing the mixture in an extruder, wherein a homogenous fibrous structure is generated in the extruder to obtain a texturised plant protein having a water content of 40% to 70% by weight,
d) first cooling of the texturised plant protein having a water content of 40% to 70% by weight, and
e) cutting the texturised plant protein having a water content of 40% to 70% by weight.

BSG is a waste product of the brewing industry, and its use in the method according to the present invention is highly advantageous from the viewpoint of circular economy. BSG is mostly composed of barley, whereas distiller grain is a mixture of corn rice and other grains (see e.g. Wikipedia excerpt "distillers grains"). Distillers Spent Grain or draff are the organic solids leftovers after fermentation and extraction of ethanol from a fermented sugar solution. The starting material for distillation can be fruits, cereals, potato, and other starch rich plants. The starch or sugar rich plants are macerated and fermented with yeast or bacteria often in combination with enzymes. As a difference to beer production, for the ethanol production the fermentation and ethanol extraction is commonly done here as a mash before separating the spent material. In the beer production, the malt extract is fermented to the strength of the final product, typically between 2.5 to 5% ethanol, whereas in the whisky distilleries the ethanol is extracted to strengths above 60% and the remaining liquid is discarded.

Brewer's Spent Grain are the organic solids leftovers mostly husks after separation of the malt extract or wort from a blend mostly composed of barley. Barley husks are acting as filter material for the separation of the extract or wort from the non-soluble parts of the grains. The separation process is done in the lauter ton or in a mash filter depending on the brewery. The spent grain is then collected and typically used as animal feed or discarded. The malt extract obtained after the separation from the husks is the boiled, cooled and then fermented with yeast to beer.

In summary brewer's spent grain are the side stream of the brewers when producing conventional beers. The malt extract is separated from the spent grain before fermentation. The fermented product is beer.

Distiller spent grain or draff are the side streams from distilleries when producing ethanol or ethanol rich products and are using all sorts of sugar and starch rich plants like fruits, cereals, potato. Most often the fermentation and ethanol extraction is done before the separation of the non-soluble parts of the plants. After the extraction, the remaining liquid and the spent grains are separated in filters and discarded or sold as animal feed.

The present invention is limited to BSG.

The term "texturized" has a well-defined meaning in the field of foodstuff and refers to the rheological and structure (geometrical and surface) attributes of a food product perceptible by means of mechanical, tactile, and where appropriate, visual and auditory receptors (e.g. ISO 11036:2020). A texturized protein in accordance with the present invention is a product that exhibits such attributes, most preferably the fibrous and elastic texture of a comparable meat product. The texturisation is generated during the extrusion step.

According to the present invention, it is understood that weight percentages refer to the entire weight of a respective composition or mixture. For example, the water content of the texturized plant protein refers to the entire weight of said texturized plant protein, and the amount of BSG in the ingredients is based on the entire amount of the ingredients used in the method of the present invention.

Various embodiments may preferably implement the following features:
Preferably, the ingredients comprise 20% to 55% by weight of BSG, more preferably 30% to 50% by weight of BSG. These amounts as well as the general amount of 15 to 60 wt.-% refer to the weight of the undried BSG. BSG has a dry weight of typically 10 to 24 wt.-%, preferably 14-22 wt.-%, based on the entire weight.

Preferably, the method further comprises a step of second cooling of the texturised plant protein after step d), preferably after step e), wherein the second cooling is preferably performed in a chiller. According to the present invention, the term "chiller" comprises cooling devices as well as freezing devices (frosters) which provide for a cooling to lower temperatures than a cooler.

Preferably, the ingredients are mixed to a pre-mixture in step b) and the pre-mixture is provided to the extruder, or the mixing step b) is performed in the extruder.

According to a preferred embodiment of the present invention, the ingredients in step a) of the method of the present invention comprise a plant protein in an amount in the range from 1-40 wt.-%, preferably 5-30 wt.-%, based on the entire weight of the ingredients to be added in said step a). The plant protein is a separate ingredient from the BSG that may also comprise proteins.

Preferably, the ingredients comprise one or more of pulses protein, preferably pea protein, soy protein, wheat gluten, gluten protein, oilseeds, protein concentrates such as soy protein concentrate, protein isolates such as pea protein isolates, and additionally other additives such as microalgae or water, malt extract, vinegar, yeast extract or yeast protein, vegetable oil, or salt such as NaCl. If present, those additional additives replace a portion of the plant protein content in the ingredients. Preferably, they are added in an amount in the range from 0-30 wt.-%, preferably 0.8-25 wt.-%, based on the entire weight of the ingredients to be added in said step a).

Protein isolates are protein enriched fractions in which the protein content is as high as 80 or more wt.-%, based on the entire amount of the isolate. Protein isolates may be obtained from the material processed as described above by a protein extraction step such as acid or alkali precipitation, membrane filtration, centrifugation, and concentration such as decantation.

Protein concentrates are protein enriched fractions, wherein the content of protein is not as high as in isolates. In a plant protein concentrate, the protein content is typically in the range of 50-70 wt.-%, based on the entire amount of the concentrate.

Preferably, the BSG comprises barley, and optionally wheat, oat, millet, sorghum, cassava root, rye, rice or maize

Preferably, the texturised plant protein is a high moisture texturised plant protein having a water content of 55% to 65% by weight.

Preferably, the extruder is at least partially heated such that the texturised plant protein has a temperature of 120°C to 220 °C, preferably 140 °C to 200 °C, wherein preferably the downstream side of the extruder is hotter than the upstream side.

Preferably, a gas is added, preferably CO₂, during step c).

In a first step, BSG is ground to a desired particle size. This can be achieved by conventional grinding techniques, such as using a colloid mill, a ball mill or a hammer mill. According to one embodiment of the present invention, grinding may be performed in a multi-stage process, involving one or more of the above grinding techniques.

Preferably, the BSG is ground in said step from a particle size of 1 to 20 mm to an average particle size (D₅₀) below 100 µm and (D₉₀) below 400 µm. Average particle sizes can be determined by methods known in the art, preferably laser diffraction or transmission/ scanning electron microscopy.

Preferably, grinding of BSG involves at least one wet milling step, e.g. using a colloid mill.

According to a particularly preferred embodiment of the present invention, said wet milling step is carried out with malt extract liquid. Malt extract liquid is defined as the last extract obtained from the mashing process. Malt extract liquid is characterized by a solids content in the range from 1 to 16 %, preferably from 1.1 to 8 % and most preferably from 1.2 to 4%, based on the entire weight of the malt extract. By using malt extract liquid instead of pure water, the amount of waste product from the brewery industry to be used in the method of the present invention can be significantly increased, thus providing a further advantage for circular economy.

According to a preferred embodiment of the present invention, 40 to 60% of all ingredients used in the method of the present invention are waste products derived from the brewery industry.

BSG and malt extract liquid may be combined with each other in a ratio of BSG to malt extract liquid from 1:0,5 to 1:2, preferably from 1:0.8 to 1:1.2, most preferably 1:1.

After the one or more grinding steps a paste may be obtained that has a viscosity between 2000-4000 mPas at 25°C (plate-plate rheometer) and a dry matter content between 9-20%. Preferably, said paste is made from BSG and malt extract liquid. It has been surprisingly found that said paste can be stored and transported e.g. to a remote extruder for 6 days when kept at a temperature of 65°C or slightly above.

The shelf life of the above paste can be extended to conditions of 25°C for at least 6 days when 0,1 to 3%, preferably 0,5-2% NaCl are added, based on the entire amount of the paste. Alternatively or in addition to the addition of a salt, the same effect can be achieved by adjusting the pH value of the paste to a value to 4,5 to 5,2, preferably 4,6 to 5, using an acid that is authorized for use in food, such as lactic or acetic acid. Optionally, commonly used preservatives may be added.

Thus, a paste may be obtained, comprising BSG having an average particle size (D₅₀) below 100 µm and (D₉₀) below 400 µm, and a malt extract liquid, wherein the paste has a viscosity between 2000-4000 mPas at 25°C (plate-plate rheometer) and a dry matter content between 9-20%.

The method of the present invention can be carried out with a system for producing a high moisture texturised plant protein. The system comprises a grinder configured to grind BSG, an extruder configured to process ingredients comprising BSG and at least one plant protein to obtain a texturised plant protein having a homogenous fibrous structure, a first cooling device configured to first cool the texturised plant protein, and a cutting device.

Preferably, the system further comprises a preconditioner for hydration of the BSG.

A texturised plant protein may be produced according to the method as described above.

The vegetarian food product may comprise 40 % to 75 % by weight of texturised plant protein, preferably 50% to 70 % by weight of texturised plant protein and/or comprise micronutrients, preferably minerals, more preferably at least one of iron, zinc or magnesium and/or vitamins, preferably at least one of B-Group, C or D group. The vegetarian food product may furthermore comprise 3-15 wt.-% fat, and the remaining amount being one or more of water, spices, herbs, and vegan binders (such as modified starch or methyl cellulose). All wt.-% are based on the entire amount of the vegetarian food product.

The vegetarian food product may comprise a fermented plant protein obtained by fermentation of the texturised plant protein with starter cultures, preferably food grade bacteria and fungi.

The invention will further be described with reference to the figures. Therein,
Fig. 1 shows a flow chart of a basic configuration according to the present disclosure,
Fig. 2 shows a flow chart of a comparative example, and
Fig. 3 shows a flow chart of a of a comparative example, and
Fig. 4 shows a flow chart of a further exemplary embodiment of the present disclosure.

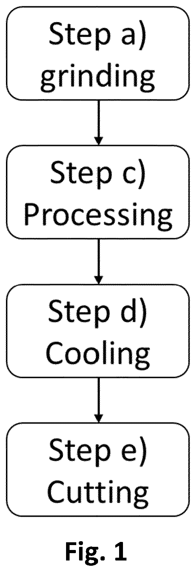

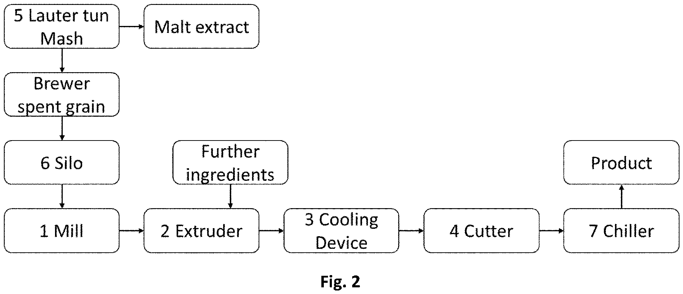

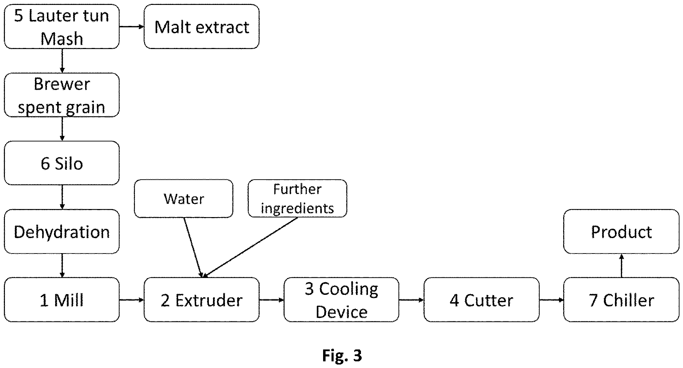

Fig. 1 depicts a basic configuration of a method according to the present disclosure, a corresponding system is shown in Figures 2 and 3. In order to perform the method according to the disclosure or use the system according to the disclosure, brewer's spent grain (BSG) may be provided. BSG may also be referred to as brewer grains or spent grains.

The method comprises the steps of a) grinding hot brewer's spent grain (BSG). The grinding is performed in a grinder 1. The grinder 1 may be a mill, e.g. a turbo mill or a colloid mill. Preferably, wet grinding is performed by adding a malt extract liquid, as described above.

The undried ground BSG is mixed with further ingredients in a step b), wherein the BSG amounts to 15% to 60% by weight of the overall mixture, i.e. all ingredients. According to a preferred embodiment, 30-40 % by weight of a plant protein such as soy protein, and 0.1-1 % by weight of a salt such as NaCl are added, the balance being water or malt extract liquid.

The obtained mixture is processed in an extruder 2 in step c). The mixing in step b) may be performed directly in the extruder 2 or before adding the mixture to the extruder 2 by conventional mixing means, such as a stirrer. Alternatively, the ingredients may be mixed to a pre-mixture in step b) and said pre-mixture may be provided to the extruder 2. In this case, mixing is performed prior to the processing step. Mixing of the ingredients may be performed in a silo, a buffer tank, or any tub suitable for the purpose.

Extruders are generally known in the art. Reference is made, for example, to WO 2012/158023 A1 or to the extruders, in particular twin-screw extruders, from Bühler. Such extruders preferably have an L/D ratio (total length to screw diameter) in the range from 20 to 60, preferably 25 to 50, and particularly preferably 25 to 40. According to the invention, the extruders are preferably operated at 100 to 1000 rpm, more preferably at 300 to 500 rpm, and particularly preferably 350 to 400 rpm.

A suitable extruder comprises at least one unit for inserting material in a first section of the extruder. The extruder can also have a water feed line and optionally a steam feed line.

The extruder comprises several sections, so-called barrel housings, in which material is processed and conveyed with the aid of at least one rotating screw. The screw elements used in the different barrel housings may be the same, but preferably are different in order to establish different processing conditions in the barrel housings.

The housing of the extruder is preferably temperature controlled. The mixture is kneaded under pressure (usually 1 to 60 bars, preferably 8 to 40 bars, and particularly preferably 10 to 20 bars) to form a homogeneous mixture. This usually involves an energy input of 10 to 120 Wh/kg, preferably 15 to 30 Wh/kg.

Preferably, in the extruder the mixture is heated above the denaturation temperature of the protein, preferably to a temperature in the range from 80 to 180 °C, more preferably 120 to 160 °C, particularly preferably 130 to 150 °C, depending on the protein used.

According to a further preferred embodiment of the present invention, the extruder may be provided with a feed opening for inserting gas into the extruder. Such an extruder is described in WO 2021/032866 A1. Preferably, said feed opening is connected to a gas container (such as a pressure bottle) and allows a controlled introduction of gas into the extruder (for example, via a regulation valve). With this gas, controlled pore formation and an associated adaptation of the product properties to the properties of real meat can be achieved.

According to the present invention, a gas is understood to mean a substance which is gaseous under normal conditions (1 bar, 20 °C). Examples of gases which can be used according to the present invention are CO₂, N₂, N₂O, NH₃ or SO₂, preferably CO₂ or N₂. The gas can be introduced in the gaseous state or alternatively as a liquefied gas.

The introduction of a gas also ensures controlled pore formation. If SO₂ is used, there is a possible formation of disulfide bridges with the proteins contained in the raw material, which results in an additional influence on the texture of the product. The gas can, for example, be introduced into the extruder in an amount of 0.01 to 5 % by weight, preferably 0.05 to 2.5 % by weight, based on the total weight of the above mixture metered into the extruder. For example, the gas may also be introduced in a quantity of 0,5 to 3,0 g (grams), preferably 1,0 to 1,5 g, of gas per kg (kilogram) of above mixture extruded in the extruder, after they have left the extruder.

According to the present invention, the gas is preferably introduced into the extruder at a pressure in the range from 10 to 50 bar, preferably 15 to 30 bar. According to the present invention, the extrudate, at the position of the feed opening for the gas in the extruder, has a temperature in the range from 80 to 180 °C, preferably 120-170 °C, particularly preferably 130 to 160 °C.

According to the invention, the feed opening for the gas is preferably located in a section of the extruder which is located in the vicinity of the cooling die (that is, at the extruder outlet), preferably in the last third of the extruder length in front of the cooling die, particularly preferably in the last quarter of the extruder length in front of the cooling die. It is particularly preferred that said feed opening is located upstream (in front of) the inlet port, so that first gas and then cellular material may be inserted into the extruder.

At the exit of the extruder, there may be provided a cooling die in order to bring the extrudate below the boiling point of water, that is, to a temperature below 100 °C under normal conditions. Cooling dies for extruders are sufficiently known. In this embodiment, the extrudate enters the cooling die through the exit of the extruder. According to a preferred embodiment of the present invention, the cooling die is a long cooling die, i.e. it has a length (defined as the length of a product flow channel through the die) that exceeds its width (defined as the longest dimension of a planar section vertically to the product flow channel).

Preferably, a distributor unit is provided between the extruder outlet and the cooling die. Said distributor unit provides for a uniform distribution of the extrudate exiting from the extruder outlet to the one or more extrudate flow channels in the cooling die. Especially preferred, said distributor unit is releasably arranged so as to be exchangeable.

Preferably, the distributor unit comprises a distribution element preferably designed as a cone. The design of said distribution element as a circular cone is particularly advantageous. It is also possible to design the distribution element as a truncated cone, in particular as a truncated circular cone. In the case of a cone or circular cone design, the distribution element can also be realized with a spherical section-shaped tip, whereby the flow behavior can be specifically influenced and adapted to the extrudate. The back pressure into the extruder can be influenced and the extent of shear of the product can be affected. The distribution element is preferably inserted in a recess of the distributor unit and is held in position in this recess by the pressure of the product flowing against the distribution element; interchangeability is particularly easy in this way.

According to a preferred embodiment of the present invention, the cooling die and optionally the distributor unit are releasably provided at the exit of the extruder. This allows retrofitting of a conventional extruder to an extruder with a cooling die.

The process according to the present invention can, in principle, be operated with a throughput in the range from 10 to 2000 kg/h. According to the present invention, the process is preferably performed with a throughput of 10 to 60 kg/h, preferably 20 to 50 kg/h and particularly preferably 30 to 40 kg/h, or alternatively with a throughput of 100 to 600 kg/h, preferably 300 to 600 kg/h and particularly preferably 400 to 550 kg/h.

During the processing step c) in the extruder 2, a homogenous fibrous structure is generated to obtain a texturised plant protein (TPP) or texturised vegetable protein (TVP) having a water content of 40% to 70% by weight. A homogenous fibrous structure may particularly refer to an alignment of the fibres present in BSG and the other ingredients in essentially the same direction.

The method further comprises a first cooling of the texturised plant protein having a water content of 40% to 70% by weight in step d). Said step is performed in a cooling device 3 such as a cooling die. After step d), the cooled texturised plant protein having a water content of 40% to 70% by weight is cut (step e)) in a cutting device such as a cutter 4. Further to the first cooling step d), a second cooling step may be performed after the first cooling step or after cutting (step e)). The second cooling may be performed in a chiller 7.

BSG is obtained from a brewing process, e.g. during beer production. The BSG is directly used in its hot state having a temperature of 60 °C to 70 °C after it is extracted from a lauter tun 5 or mash. The grinding step a) is thus be performed with hot BSG which is subsequently provided to the extruder 2. Thereby, energy consumption is reduced since less additional energy or heat has to be provided during extrusion.

Preferably, the ingredients of the mixture comprise 20% to 55% by weight of BSG, more preferably 30% to 50% by weight. The ingredients may further comprise one or more of pulses protein, preferably pea protein, soy protein, wheat gluten, gluten protein, oilseeds, protein isolates, protein concentrates, microalgae ,water, malt extract, vinegar, yeast extract or yeast protein, vegetable oil, or salt such as NaCl The BSG may comprise barley, and optionally wheat, oat, millet, sorghum, cassava root, rye, rice, maize, spent grain protein concentrate or any mixture of the above depending on the preceding brewing process.

Water may be added to the mixture during the processing step c) in the extruder 2.

Moreover, a gas may be added during processing of the mixture in the extruder 2 in step c). Preferably, the gas is CO₂.

The resulting product is a high moisture texturised plant protein having a water content of 40% to 70% by weight, preferably 55% to 65% by weight. Accordingly, the total solids content of said low-moisture product is in the range from 60-30 wt.-%, preferably 45-35 wt.-%, based on the entire weight of the product. The water content and other properties of the product may be adjusted by changing certain parameters of the extruder 2 such as the dimension and/or angles of the screw(s), the dimension of the barrel, length of the extrusion, temperature of the extrusion process, or the used die.

The extruder 2 may be at least partially heated such that the resulting texturised plant protein, i.e. the product, has a temperature of 120 °C to 220 °C and more preferred between 140 °C and 200 °C. The downstream side of the extruder 2 may be hotter than the upstream side.

In particular, the extruder 2 may be preheated before the mixture is provided to the extruder 2 or mixed in the extruder, respectively. Different areas of the extruder 2 may be heated differently.

Cooling in the first cooling step may be performed by a cooling die 3. The texturised plant protein having a water content of 40% to 70% by weight may be cooled to a temperature of 50 °C to 90 °C, preferably 70 °C. The second cooling may further reduce the temperature of the texturised plant protein to 3 °C to 8 °C, preferably 4 °C 6 °C, for refrigerated storage or - 16°C to -30°C, preferably -18°C --25°C for frozen storage. The second cooling may be performed in a chiller 7, preferably by chilling the product using cold air or water or cryogenic liquids.

The method of the present invention can be carried out in a system for producing a texturised plant protein by using the method as described above, as exemplarily shown in Figs. 2 or 3. The system comprises a grinder 1 configured to grind BSG and an extruder 2 configured to process ingredients comprising BSG and at least one plant protein to obtain a texturised plant protein having a water content of 40% to 70% by weight and having a homogenous fibrous structure. The system further comprises a first cooling device 3 configured to cool the texturised plant protein having a water content of 40% to 70% by weight. As described above, the first cooling device 3 may be a cooling die. After cooling, the texturised plant protein is cut in a cutting device 4 such as a cutter.

Moreover, a second cooling device may be provided. The second cooling device may be provided after the first cooling device 3 and preferably after the cutting device 4. As described above, the second cooling device may be a chiller 7.

Fig. 2 describes a method in which BSG is obtained from the mash in a lauter tun 5. Moreover, malt extract may also be obtained from the mash. BSG is stored in a silo 6 and subsequently provided to a mill 1. Warm or hot BSG may be used. The BSG may also be dehydrated or rehydrated before or after grinding. The milled or ground BSG is subsequently provided to an extruder 2 together with further ingredients. The ingredients may also be mixed prior to filling them into the extruder 2. In the extruder 2, a homogenous fibrous structure is generated to obtain a texturised plant protein. The obtained texturised plant protein is subsequently cut in a cutter 4 chilled in a chiller 7, by using cold air, water or cryogenic liquids such as nitrogen, generate the final product high moisture (wet) texturised plant protein (TPP) or texturised vegetable protein (TVP), respectively.

Fig. 3 describes a methd in which in addition to Fig. 2, the BSG is dehydrated prior to grinding it in the mill 1. Therefore, water is added during the processing step in the extruder 2. As described above, the wet texturised plant protein obtained by the extrusion process in the extruder 2 is subsequently cooled, cut and preferably chilled to obtain the final product.

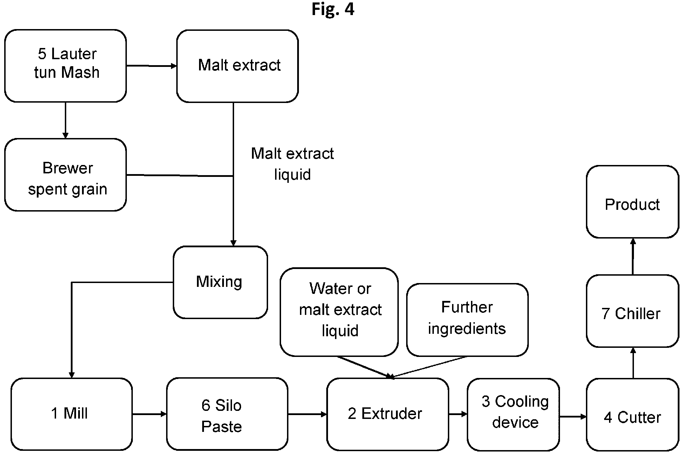

Fig. 4 describes a further preferred embodiment according to the present disclosure. Here, BSG is mixed with malt extract liquid and ground to the desired particle size in a mill 1, resulting in a paste. Said paste can be stored in a silo 6 (tank) for 6 days at a temperature above 65°C. When a salt such as NaCl (for example in an amount of 3% by weight) is added or the pH value of the paste is adjusted to above 4.5, storage can be performed at 25°c for up to 6 days. Of course, during said storage period the paste can also be transported.

Subsequently, the paste is added into an extruder 2 and mixed therein with further ingredients, for example a plant protein such as soy protein concentrate or salt such as NaCl, and water or malt extract liquid. Further processing is carried out as described for the other figures above. According to a preferred embodiment of the process of Fig. 4, the extruded product is first cooled in a first cooling device 3, subsequently cut in a cutter 4, and cooled in a second cooling device (here a chiller 7).

A food product, in particular a vegetarian food product, comprising a texturised plant protein may be produced. In particular, the food product may comprise 40% to 75% by weight of texturised plant protein, preferably 50% to 70% by weight of texturised plant protein. Moreover, the food product may comprise micronutrients, preferably minerals, more preferably at least one of iron, zinc or magnesium and/or vitamins, preferably at least one of B-Group, C or D.

The texturised plant protein comprising a high amount of BSG as described above may be mixed with further ingredients (e.g. flavours, stabilising ingredients, salt, protein, etc.), water and/or oil to form a dough or mix. Said dough or mix may then be processed to obtain a food product.

The texturised plant protein comprising a high amount of BSG as described above may be fermented using food grade bacteria and fungi starter cultures (e.g. lactobacillus, staphylococcus, and penicillium species). By fermentation of the texturised plant protein flavor may be added and the subsequent food product may be stabilised (e.g. vegetarian sausage or salami).

BSG having a high water content may be ground, mixed with a plant protein (for example concentrate or isolate) and water, extruded and further processed as explained above to obtain a wet, i.e. high moisture, texturised plant protein.

BSG may be mixed and ground with malt extract liquid (2 wt.-% solids content) from the last extraction step of a brewing process in a ratio of 1:1 and mixed with plant protein concentrate, and water, extruded and further processed as explained above to obtain a wet texturised plant protein.

Said food product may comprise vegetarian Burger Patties, vegetarian Sausage, vegetarian Samosas, vegetarian Dumplings, vegetarian Gyros, vegetarian Goulash, vegetarian Kebab, vegetarian Pulled Pork, vegetarian Pulled Beef, vegetarian Mince Meat, vegetarian Schnitzel, vegetarian Hot Dogs, vegetarian Meat Balls, vegetarian Chicken Nuggets, vegetarian Chorizo, vegetarian Chicken Strips or vegetarian Züri Geschnetzeltes.

The present disclosure thus provides a method and food product which uses brewer's spent grain (BSG) as an ingredient (preferably main ingredient), which has mainly been classified as food waste or byproduct and was thus until now not easily accessible for production of human food products. The addition of BSG to obtain high moisture texturized vegetable protein as a functional fiber and protein supplement improves the texture and lowers the cost compared to similar ingredients. Moreover, using an upcycled ingredient from the beverages industry significantly improves the CO₂ footprint of the foods produced with BSG.

Other aspects, features, and advantages will be apparent from the summary above, as well as from the description that follows, including the figures and the claims.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

### Example 1

15 kg of wet brewer spent grain (dry weight of 22 wt.-%) from a lauter tun mash of a beer brewing process were blended with 15 kg of water and ground to a paste in a colloid mill (Stephan MZ 100) to a desired particle size of (D₅₀) below 100 µm and (D₉₀) below 400 µm, optionally via more than one grinding steps.

The thus obtained material was inserted into an extruder and mixed with soy protein concentrate and NaCl in a ratio of 30 wt.-% brewer spent grain paste, 39 wt.-% soy protein concentrate, 0,5 wt.-% NaCl and the balance being water, based on the entire amount of ingredients.

The thus obtained mixture was extruded under conditions of mass flow of 40 kg/h, motor speed of 247 rpm, extruder barrel temperatures between 140-146 °C, and die plate pressure of 9 bar. The extruded texturized protein product was cooled in a cooling die to below 100°C and cut, chilled and frozen for preservation before further processing.

### Comparative Example 1

The process of example 1 was repeated, but the brewer spent grain was dehydrated before grinding to a water content of 5%. Subsequently, the material was rehydrated by adding the amount of water that was removed during the drying step into the extruder. Further process steps were identical as in example. 1

### Comparative Example 1

The process of example 1 was repeated, but the brewer spent grain was dehydrated before grinding to a water content of 5%. Subsequently, the material was rehydrated by adding the amount of water that was removed during the drying step into the extruder.

The thus obtained material was inserted into an extruder and mixed with soy protein concentrate and NaCl in a ratio of 30 wt.-% brewer spent grain paste, 19 wt.-% soy protein concentrate, 19 wt.-% wheat gluten, 0,5 wt.-% NaCl and the balance being water, based on the entire amount of ingredients.

Further process steps were identical as in example. 1

### Example 2

The process of example 1 was repeated, but the brewer spent grain was mixed with malt extract liquid (2 wt.-% solids content) from the last extraction step of a brewing process in a ratio of 1:1.

The thus obtained mixture was ground in a colloid mill (Stephan MZ 100) to a desired particle size of (D₅₀) below 100 µm and (D₉₀) below 400 µm, optionally via more than one grinding steps. A paste was obtained that could be stored in a silo (tank) at a temperature slightly above 65°C for 6 days.

The paste was inserted into an extruder and mixed with soy protein concentrate, NaCl in a ratio of 24 wt.-% brewer spent grain, 24 wt.-% malt extract liquid, 38 wt.-% soy protein concentrate, 0,9 wt.-% NaCl and the balance being water, based on the entire amount of ingredients. The mixture of ingredients thus contained 48 wt.-% of waste material from a brewing process.

The thus obtained mixture was extruded under conditions of mass flow of 299 kg/h, motor speed of 498 rpm, and die plate pressure of 23 bar. The extruded texturized protein product was cooled in a cooling die to below 100°C and cut, chilled and frozen for preservation before further processing.
amount of water that was removed during the drying step into the extruder. Further process steps were identical as in example. 1

### Example 3

The process of example 1 was repeated, but the brewer spent grain was dehydrated before grinding to a water content of 5%. Subsequently, the material was rehydrated by adding the amount of water that was removed during the drying step into the extruder.

The thus obtained material was inserted into an extruder and mixed with soy protein concentrate and NaCl in a ratio of 30 wt.-% brewer spent grain paste, 19 wt.-% soy protein concentrate, 19 wt.-% wheat gluten, 0,5 wt.-% NaCl and the balance being water, based on the entire amount of ingredients.

Further process steps were identical as in example. 1

### Example 4

The process of example 1 was repeated, but the brewer spent grain was mixed with malt extract liquid (2 wt.-% solids content) from the last extraction step of a brewing process in a ratio of 1:1.

The thus obtained mixture was ground in a colloid mill (Stephan MZ 100) to a desired particle size of (D₅₀) below 100 µm and (D₉₀) below 400 µm, optionally via more than one grinding steps. A paste was obtained that could be stored in a silo (tank) at a temperature slightly above 65°C for 6 days.

The paste was inserted into an extruder and mixed with soy protein concentrate, NaCl in a ratio of 24 wt.-% brewer spent grain, 24 wt.-% malt extract liquid, 38 wt.-% soy protein concentrate, 0,9 wt.-% NaCl and the balance being water, based on the entire amount of ingredients. The mixture of ingredients thus contained 48 wt.-% of waste material from a brewing process.

The thus obtained mixture was extruded under conditions of mass flow of 299 kg/h, motor speed of 498 rpm, and die plate pressure of 23 bar. The extruded texturized protein product was cooled in a cooling die to below 100°C and cut, chilled and frozen for preservation before further processing.

## Claims

1. Method for producing a high moisture texturised plant protein having a water content of 40% to 70% by weight, the method comprising the steps of:
a) grinding of hot brewer's spent grain, BSG, wherein the BSG is directly obtained from a brewing process, wherein the hot BSG has a temperature of 60°C to 70°,
b) providing ingredients for obtaining a mixture, the ingredients comprising 15% to 60% by weight of the undried ground BSG and at least a plant protein, based on the entire weight of the mixture, and wherein the undried BSG has a dry weight of 10 to 24 %,
c) processing the mixture in an extruder (2), wherein a homogenous fibrous structure is generated in the extruder (2) to obtain a texturised plant protein having a water content of 40% to 70% by weight,
d) first cooling of the texturised plant protein having a water content of 40% to 70% by weight, and
e) cutting the texturised plant protein having a water content of 40% to 70% by weight.

2. Method according to claim 1, wherein the ingredients comprise 20% to 55% by weight of the undried BSG, preferably 30% to 50% by weight of the undried BSG, based on the entire weight of the mixture.

3. Method according to claim 1 or 2, the method further comprising a step of second cooling of the texturised plant protein after step d), preferably after step e), wherein the second cooling is preferably performed in a chiller.

4. Method according to any one of the preceding claims, wherein the ingredients are mixed to a pre-mixture in step b) and the pre-mixture is provided to the extruder (2), or
wherein the mixing step b) is performed in the extruder (2).

5. Method according to any one of the preceding claims, wherein the ingredients comprise one or more of pulses protein, preferably pea protein, soy protein, wheat gluten, gluten protein, oilseeds, protein isolates, protein concentrates, spent grain protein isolates, microalgae or water and/or wherein the BSG comprises barley, and optionally wheat, oat, millet, sorghum, cassava root, rye, rice or maize.

6. Method according to any one of the preceding claims, wherein the texturised plant protein is a high moisture texturised plant protein having a water content of 55% to 65% by weight.

7. Method according to any one of the preceding claims, wherein the extruder (2) is at least partially heated such that the texturised plant protein has a temperature of 120 °C to 220 °C, preferably 140 °C to 200 °C,
wherein preferably the downstream side of the extruder (2) is hotter than the upstream side, and/or wherein a gas is added, preferably CO₂ , during step c).

## Patentansprüche

1. Verfahren zur Herstellung eines texturierten Pflanzenproteins mit hohem Feuchtigkeitsgehalt und welches einen Wassergehalt von 40 bis 70 Gew.-% aufweist, wobei das Verfahren die folgenden Schritte umfasst:
a) Zerkleinern von heißem Biertreber (BSG), wobei der BSG direkt aus einem Brauprozess gewonnen wird und der heiße BSG eine Temperatur von 60 °C bis 70 °C aufweist,
b) Bereitstellen von Zutaten zur Herstellung einer Mischung, wobei die Zutaten 15 bis 60 Gew.-% des ungetrockneten, zerkleinerten BSG und mindestens ein pflanzliches Protein, bezogen auf das Gesamtgewicht der Mischung, umfassen, und wobei der ungetrocknete BSG ein Trockengewicht von 10 bis 24 % aufweist,
c) Verarbeiten der Mischung in einem Extruder (2), wobei im Extruder (2) eine homogene Faserstruktur erzeugt wird, um ein texturiertes Pflanzenprotein zu erhalten, welches einen Wassergehalt von 40 bis 70 Gew.-% aufweist,
d) erstes Abkühlen des texturierten Pflanzenproteins, welches einen Wassergehalt von 40 bis 70 Gew.-% aufweist, und
e) Zerschneiden des texturierten Pflanzenproteins, welches einen Wassergehalt von 40 bis 70 Gew.-% aufweist.

2. Verfahren nach Anspruch 1, wobei die Zutaten 20 bis 55 Gew.-% des ungetrockneten BSGs, vorzugsweise 30 bis 50 Gew.-% des ungetrockneten BSGs, bezogen auf das Gesamtgewicht der Mischung, umfassen.

3. Verfahren nach Anspruch 1 oder 2, wobei das Verfahren ferner einen Schritt des zweiten Abkühlens des texturierten Pflanzenproteins nach Schritt d), vorzugsweise nach Schritt e), umfasst, wobei das zweite Abkühlen vorzugsweise in einem Kühler durchgeführt wird.

4. Verfahren nach einem der vorstehenden Ansprüche, wobei die Zutaten in Schritt b) zu einer Vormischung vermischt werden und die Vormischung dem Extruder (2) zugeführt wird, oder wobei der Mischschritt b) im Extruder (2) durchgeführt wird.

5. Verfahren nach einem der vorstehenden Ansprüche, wobei die Zutaten eines oder mehrere der folgenden Elemente umfassen: Hülsenfrüchteprotein, vorzugsweise Erbsenprotein, Sojaprotein, Weizengluten, Glutenprotein, Ölsaaten, Proteinisolate, Proteinkonzentrate, Proteinisolate aus Trebern, Mikroalgen oder Wasser und/oder wobei der BSG Gerste und optional Weizen, Hafer, Hirse, Sorghum, Maniokwurzel, Roggen, Reis oder Mais umfasst.

6. Verfahren nach einem der vorstehenden Ansprüche, wobei das texturierte Pflanzenprotein ein texturiertes Pflanzenprotein mit hohem Feuchtigkeitsgehalt ist, das einen Wassergehalt von 55 bis 65 Gew.-% aufweist.

7. Verfahren nach einem der vorstehenden Ansprüche, wobei der Extruder (2) zumindest teilweise so beheizt wird, dass das texturierte Pflanzenprotein eine Temperatur von 120 °C bis 220 °C, vorzugsweise 140 °C bis 200 °C, aufweist, wobei vorzugsweise die stromabwärts gelegene Seite des Extruders (2) heißer ist als die stromaufwärts gelegene Seite, und/oder wobei während des Schritts c) ein Gas, vorzugsweise CO₂, zugegeben wird.

## Revendications

1. Procédé de production d'une protéine végétale texturée à forte teneur en humidité, présentant une teneur en eau comprise entre 40 % et 70 % par poids, ledit procédé comprenant les étapes suivantes :
a) broyage de drêches de brasserie chaudes (BSG), lesdites drêches de brasserie étant obtenues directement à l'issue d'un processus de brassage, ladite BSG chaude ayant une température comprise entre 60 °C et 70 °C,
b) mise à disposition d'ingrédients pour obtenir un mélange, les ingrédients comprenant 15 % à 60 % par poids de BSG broyé non séché et au moins une protéine végétale, par rapport au poids total du mélange, et le BSG non séché présentant une teneur en matière sèche comprise entre 10 et 24 %,
c) traitement du mélange dans une extrudeuse (2), une structure fibreuse homogène étant générée dans l'extrudeuse (2) pour obtenir une protéine végétale texturée présentant une teneur en eau comprise entre 40 % et 70 % par poids,
d) un premier refroidissement de la protéine végétale texturée présentant une teneur en eau comprise entre 40 % et 70 % par poids, et
e) découpe de la protéine végétale texturée présentant une teneur en eau comprise entre 40 % et 70 % par poids.

2. Le procédé selon la revendication 1, dans lequel les ingrédients comprennent 20 % à 55 % par poids de la BSG non séchée, de préférence 30 % à 50 % par poids de la BSG non séchée, par rapport au poids total du mélange.

3. Le procédé selon la revendication 1 ou 2, le procédé comprenant en outre une étape de deuxième refroidissement de la protéine végétale texturée après l'étape d), de préférence après l'étape e), le deuxième refroidissement étant de préférence réalisé dans un refroidisseur.

4. Le procédé selon l'une quelconque des revendications précédentes, dans lequel les ingrédients sont mélangés pour former un prémélange à l'étape b) et le prémélange est acheminé vers l'extrudeuse (2), ou dans lequel l'étape de mélange b) est réalisée dans l'extrudeuse (2).

5. Le procédé selon l'une quelconque des revendications précédentes, dans lequel les ingrédients comprennent une ou plusieurs des substances suivantes : protéines de légumineuses, de préférence protéines de pois, protéines de soja, gluten de blé, protéines de gluten, graines oléagineuses, isolats de protéines, concentrés de protéines, isolats de protéines de drêches, microalgues ou eau et/ou dans lequel la BSG comprend de l'orge, et éventuellement du blé, de l'avoine, du millet, du sorgho, de la racine de manioc, du seigle, du riz ou du maïs.

6. Le procédé selon l'une quelconque des revendications précédentes, dans lequel la protéine végétale texturée est une protéine végétale texturée à forte teneur en humidité présentant une teneur en eau comprise entre 55 % et 65 % en poids.

7. Le procédé selon l'une quelconque des revendications précédentes, dans lequel l'extrudeuse (2) est au moins partiellement chauffée de telle sorte que la protéine végétale texturée présente une température comprise entre 120 °C et 220 °C, de préférence entre 140 °C et 200 °C,
dans lequel, de préférence, le côté aval de l'extrudeuse (2) est plus chaud que le côté amont, et/ou dans lequel un gaz, de préférence du CO₂, est ajouté au cours de l'étape c).
